# EUROPEAN PATENT SPECIFICATION

(11) **EP 3 756 770 B1**
(45) Date of publication and mention of the grant of the patent: **20.10.2021**
(21) Application number: 20180989.4
(22) Date of filing: 19.06.2020
(51) Int. Cl.: B05C 9/14, B05C 13/02, H02K 15/12

(54) **IMPREGNATION PLANT FOR COMPONENTS OF ELECTRIC MOTORS AND ITS RESPECTIVE COMPONENT-SUPPORT APPARATUS**
IMPRÄGNIERANLAGE FÜR KOMPONENTEN VON ELEKTROMOTOREN UND IHRE JEWEILIGEN KOMPONENTEN-TRÄGERVORRICHTUNGEN
INSTALLATION D'IMPRÉGNATION DES COMPOSANTS DE MOTEURS ÉLECTRIQUES ET DE LEURS DISPOSITIFS DE SUPPORT RESPECTIFS

(30) Priority: 25.06.2019 IT 201900010068
(43) Date of publication of application: 30.12.2020
(73) Proprietor: Tecnofirma S.p.A., 20900 Monza (MB) (IT)
(72) Inventor: MAZZALI, Ivo, 20900 MONZA (MB) (IT)
(74) Representative: Ottazzo, Marco Francesco Agostino

(56) References cited:
- DE-U1-202019 001 441
- GB-A- 1 241 416
- US-B1- 6 302 961

## Description

The present invention generally relates to an impregnation plant for components of electric motors and, in particular, to a component-support apparatus for supporting a component to be introduced in such impregnation plant.

As known, an electric motor is formed of a stator and a rotor. These two components, when properly combined with each other, generate a magnetic field as necessary for the operation of the electric motor. In wound stator electric motors, the stator is just provided with windings traditionally consisting of a copper wire coil. The copper wire coil shall be impregnated with specific resins in order to increase its mechanical strength.

Unlike wound stator electric motors, in a "hairpin" stator electric motor such stator is provided with a plurality of metal bars, typically made from copper, instead of a copper wire coil. "Hairpin" stator electric motors are widely used in the automotive sector. Because of the heavy duty which they are intended for, the metal bars of "hairpin" stator electric motors also shall be impregnated with specific resins in order to increase their mechanical strength and prevent wires from rubbing with each other, which might scratch insulation.

Irrespective of the manufacturing technology, a stator for electric motors is generally formed of an internally hollow cylinder. The copper wires or bars are incorporated in the wall of the cylinder and run all along the length of such wall, in the direction of their respective generatrixes, and consequently project at the two circumferential ends, or heads, of the cylinder itself.

An impregnation process for stators of electric motors can traditionally be implemented according to a so-called "trickling" technology. The traditional process comprises a first step wherein the stator is pre-heated to a predetermined temperature, which varies in accordance with the type of resin that will be used. After this pre-heating step, a specific amount of resin is dripped in well determined areas of the copper wires or bars, for a given period of time and a given sequence of positioning of the dispensers of the impregnation plant. The parameters related to the amount of resin, dispensing time and dispenser positioning vary depending on the type of stator.

During impregnation, the stator shall be held by a specifically designed support apparatus which keeps the stator itself in rotation in order to prevent resin from dripping (drip loss). The resin, deposited on the heads only of the cylinder which the stator is made-up of, flows along the wires or bars by capillarity, up to penetrating and filling their cavities placed internally to the wall of such cylinder. The main purpose of an impregnation process is just that of saturating all of these cavities, and consequently compacting the wires in order for preventing any rubbings thereof.

Plants of known types for impregnating stators for electric motors, which specifically use the so-called "trickling" technology and which are provided with their respective stator support apparatuses, are disclosed, for example, in documents DE 202019001441 U1 and GB 1241416 A. Document US 6302961 B1 discloses a further impregnation plant of a known type for electric components, in particular, but not exclusively, stators for electric motors.

In impregnation plants, the main criticality is due to the chemical composition of the resins, which can be epoxy, phenolic or acrylic resins or resins comprising polyester with monomers, etc. Resins are typically liquid before baking, and become solid after thermal polymerization. In order to foster diffusion and penetration of resin in the complete mass of the wirings (be they made-up of wire or enameled copper bars) and in the insulated slots of the laminated cores by capillarity, resins are in fact formulated in a low viscosity liquid phase. Once applied onto the wirings, after the latter are heated to a high temperature, resins transform into a solid phase.

Resins usually comprise a basic product and a catalyst, which is a high vapor pressure one by its nature. Consequently, during the thermochemical reticulation and gelation processes, in an impregnation plant catalyzing substances are released by evaporation of the catalyzing substances which, besides drying the grease necessary for lubricating the mechanisms of the plant itself, create an ideal means for a migration of particles of resin which catalyze on the surfaces of the support apparatus in the form of tacky crystals. Since this support apparatus generally consists of a gripper which acts onto the inner surface of the stator cylinder, the catalyzing substances seep between the linkages of the apparatus itself, thus deforming and seizing them up. Another unavoidable problem arises during the impregnation process, during which resin is dripped onto the winding of the stators, wherefrom, after a number of cycles, it subsequently reaches the gripper by capillarity, thus incrusting it and jeopardizing its operation.

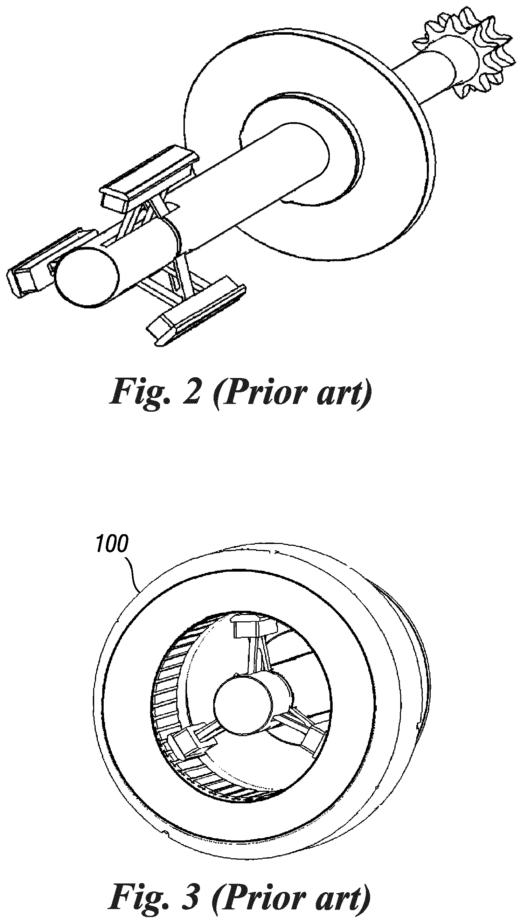

The grippers that are still typically used in impregnation processes consist of four-bar linkages, mounted on a central rotating (sleeve-shaped) shaft. These linkages, the number of which is usually three, extend in order to hold the stator from the inside, as shown in attached figures 2 and 3. In these linkage-based grippers, the grip jaws of the stators are operated by way of springs (or electromechanical screwing systems) inserted inside a grip (sleeve-shaped) shaft on the stator in order to provide the necessary extension force.

The same feature that makes it possible for resin to penetrate the slots of a stator also makes it possible for such resin to seep in the covers used to try and protect the linkages of the gripper. The most severe problem created by resin in impregnation processes begins with its dispensing in a liquid phase up to the end of the baking process, when the resin is in a solid form, thus causing the production process to slow-down, or even stop, and consequently expensive maintenance operations.

A solution aiming at reducing possible stainings, caused by unavoidable resin drips, consists of covering the linkages of the gripper with plastic covers. However, this measure results in reducing the strokes of the linkages, a reason whereby a gripper can substantially be used to tighten stator featuring one fixed diameter only.

However much one tries to protect the linkages of a gripper, the nature itself of resin is such that, over time, the resin itself is able to penetrate the interstices of a gripper, thus jeopardizing its operation because of polymerization. Therefore, a periodical maintenance of traditional four-bar linkages is a time consuming work, which consequently results in loss of productivity, and expensive, because the gripper has to be extracted from the plant, opened, disassembled, and finally cleaned up by way of aggressive systems (sandblasting or cryogenic sandblasting), after what it shall be re-assembled, greased, and re-inserted into the plant.

An object of the present invention is therefore to provide an impregnation plant for components of electric motors, in particular a component-support apparatus, that is capable of solving the above-mentioned drawbacks of the prior art in a particularly effective manner.

In details, an object of the present invention is to provide a support apparatus for components of electric motors that is not subject to misoperations and/or stops due to resin depositing on its own linkages.

Another object of the present invention is to provide a support apparatus for components of electric motors that makes its respective lubrication and maintenance operations simpler than with prior art grippers.

These objects and others according to the present invention are achieved by implementing an impregnation plant for components of electric motors, in particular a component-support apparatus, as set forth in claim 1.

Further characteristics of the invention are highlighted in the dependent claims, which are an integral part of the present disclosure.

The characteristics and advantages of an impregnation plant for components of electric motors, in particular a component-support apparatus, according to the present invention will be more apparent from the following explanatory, but not limitative, description, which makes reference to the schematic drawings attached hereto, wherein:
figure 1 is a schematic view of a general impregnation plant for components of electric motors, which can be equipped with a support apparatus according to the present invention;
figures 2 and 3 show a support apparatus for components of electric motors according to the prior art;
figure 4 shows an example, preferred embodiment of a support apparatus for components of electric motors according to the present invention, wherein the support apparatus is shown in a closed or non-operating configuration;
figure 5 shows the support apparatus of figure 4, wherein such support apparatus is shown in an open or operating configuration;
figure 6 shows the support apparatus in the open configuration of figure 5 while it is in a gripping position to grip a stator;
figure 7 is a detailed view of a (disassembled) detail of the support apparatus of figure 4;
figure 8 is a cross-sectional view of the support apparatus of figure 4, shown in the closed configuration of such figure 4;

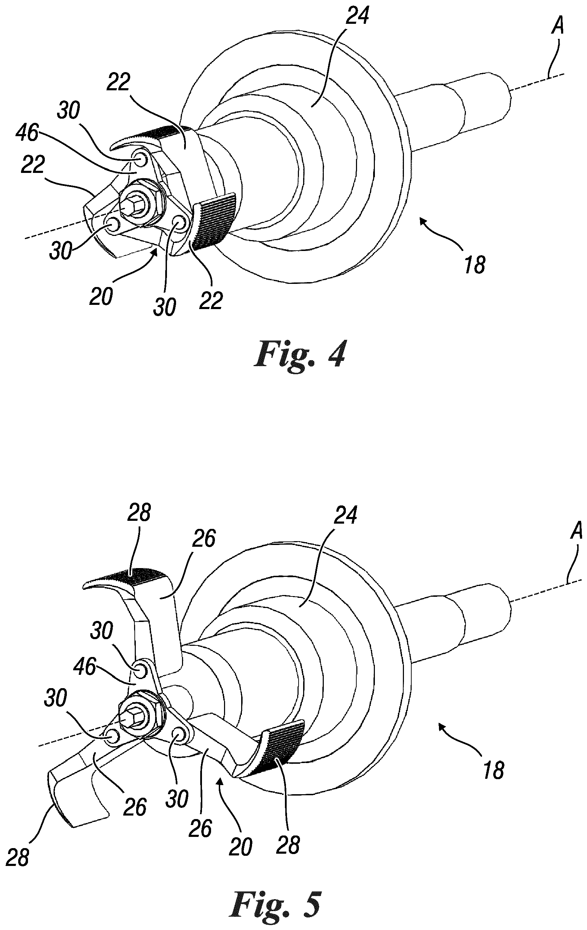

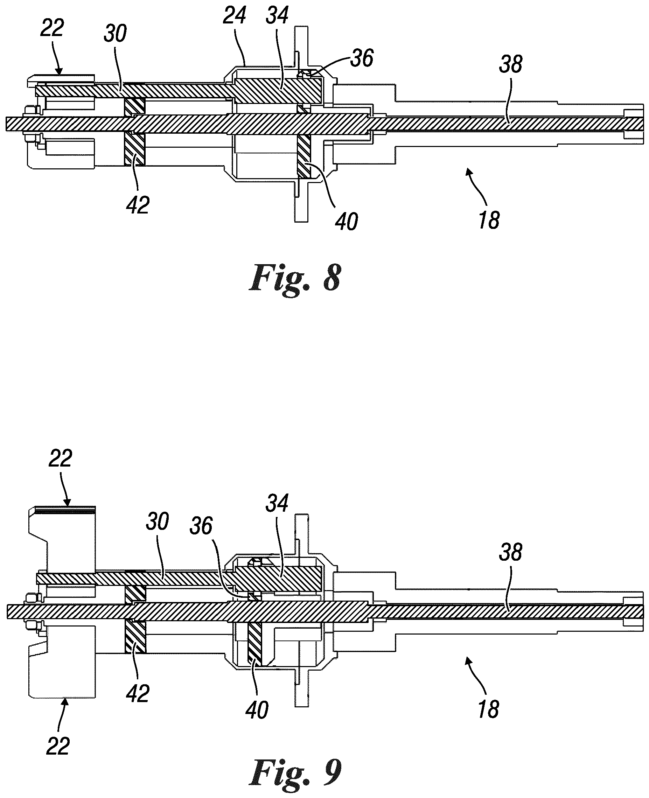

figure 8 is a cross-sectional view of the support apparatus of figure 4, shown in the open configuration of figure 5;
figure 9 is another detailed view of a detail of the support apparatus of figure 4; and

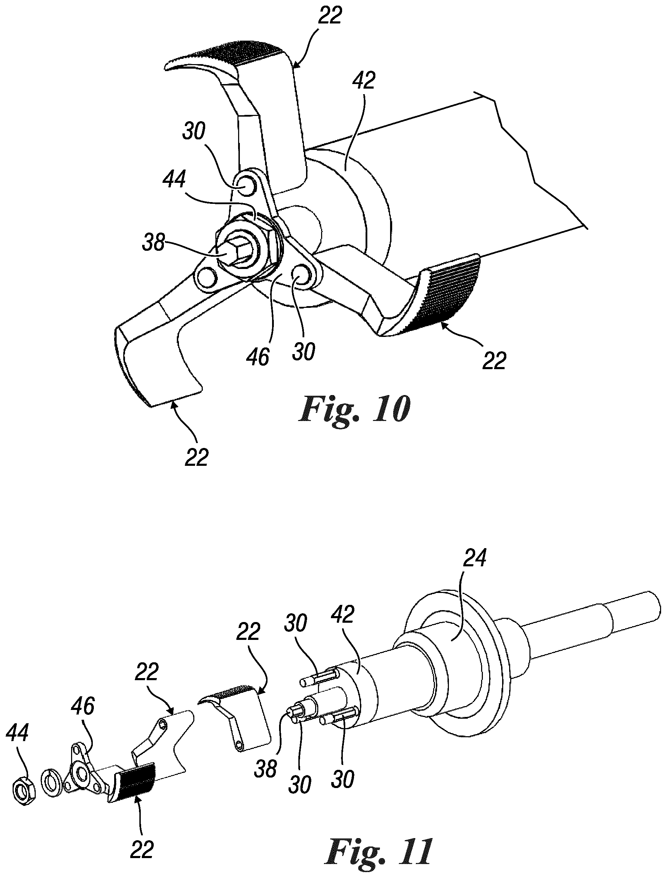

figure 10 is an exploded view of the main component parts of the support apparatus of figure 4.

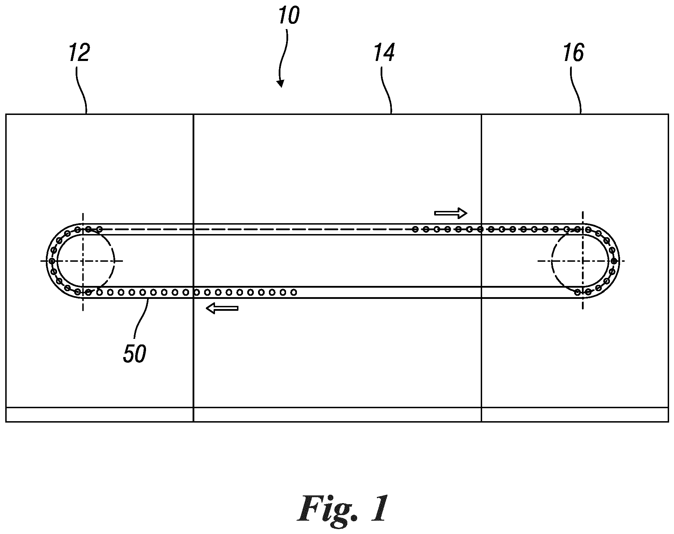

In particular, figure 1 shows a generic impregnation plant for components of electric motors provided with a support apparatus according to the present invention. The impregnation plant is identified by the reference numeral 10 as a whole. The impregnation plant 10 comprises a plurality of workstations linearly and sequentially arranged one with respect to the other, wherein each component 100 is first prepared for impregnation, then at least partially coated with an impregnating substance (resin) and subsequently finished in a fully automated manner. As a matter of fact, all workstations making up the impregnation plant 10 are managed and controlled by way of a central processing unit (CPU), the functions of which are to schedule, monitor, manage, and optimize all operating steps of the impregnation method.

In particular, each component 100 to be impregnated is typically a stator for electric motors consisting of an internally hollow cylindrical body. The cylindrical body is provided with windings consisting of metal bars or wires incorporated in the wall of the cylindrical body and running all along the length of such wall, in the direction of their respective generatrixes, hence projecting at the two circumferential ends, or heads, of the cylindrical body itself. The complete surface of the windings, in particular that incorporated in the wall of the cylindrical body, shall be coated with an impregnating substance (resin) in order to increase the mechanical strength of the windings themselves.

In details, the plant 10 comprises at least one heating station 12, configured for heating each component 100 to a predetermined temperature, at least one impregnation station 14, placed downstream of the heating station 12 and configured for coating at least a part of each component 100 with an impregnating substance, at least one finishing station 16, placed downstream of the impregnation station 14 and configured for making the impregnating substance permanently adhere to each component 100, and at least one support apparatus 18 for supporting each component 100, configured for rotatably supporting such component 100 and to move it from one workstation to another. For example, the finishing station 16 possibly comprises a polymerization furnace internally to which the impregnating substance (resin) is baked and polymerizes and definitely hardens.

Figures 4 to 10 show a preferred embodiment of the support apparatus 18 for components 100 of electric motors according to the present invention. The support apparatus 18 is equipped with its own moving means 50 arranged inside the plant 10, so as to be able to move each component 100 from one workstation to another. For example, these moving means 50 might consist of a rigid chain, as shown in figure 1, but they might also comprise a robot which transfers the support apparatus 18 from one workstation to another. Alternatively, should the workstations of the plant 10 be concentrated inside a single module, the moving means 50 of each support apparatus 18 might be properly designed for this specific configuration of the plant 10.

The support apparatus 18 thus comprises at least one gripping assembly 20, provided with a plurality of gripping elements 22 extendible about a predefined axis A by way of rotation. The support apparatus 18 also comprises at least one actuator assembly 24, configured for making the gripping elements 22 rotate about a predefined axis A in both directions.

Each gripping element 22 is shaped like a petal, a first root portion 26 thereof being hinged to the body of the support apparatus 18 and a second gripping portion 28 being integrally formed in one piece with the first root portion 26 and inclined at a predetermined angle with respect to such first root portion 26. The second gripping portion 28 is arch-shaped and is provided with a knurled surface to hold the inner cylindrical surface of a respective component 100 by way of contact.

Consequently, the component 100, which consists of a cylindrical stator of an electric motor, is securely gripped thanks to the extension of the gripping elements 22, the number of which is preferably greater than or equal to three, which, by extending (like the petals of a tulip), make it possible to lock stators 100 having a variable inner diameter. The inner diameter of the stator 100 can vary over a substantial range. As a matter of fact, the gripping elements 22 can have a stroke preferably comprised in a range from 80 mm to 140 mm, but different dimensional ranges can be covered, while leaving the overall dimensions unchanged, by properly modifying the dimensions of such gripping elements 22. In other words, it is possible to have support apparatuses 18 featuring smaller or greater dimensions by parametrizing the dimensional values of the gripping elements 22.

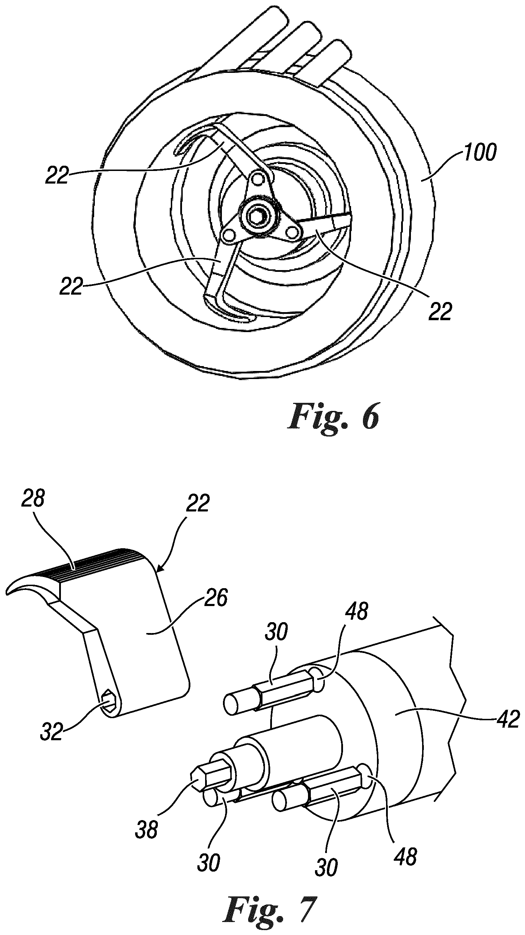

Figure 4 shows an embodiment of the gripping elements 22 in their maximum-retraction configuration (closed configuration of the support apparatus 18), whereas figure 5 shows the same gripping elements 22 in their maximum extension configuration (open configuration of the support apparatus 18). Figure 6 shows the same gripping elements 22 in the configuration of figure 5 and in the gripping position on the inner cylindrical surface of a respective component 100.

According to a preferred embodiment, as shown in figure 7, the first root portion 26 of each gripping element 22 is keyed on a respective end shaft 30, parallel to the predefined axis A, which sealingly protrudes from the actuator assembly 24. The attachment of each gripping element 22 to the body of the support apparatus 18 is preferably provided by a coupling between a hole 32, featuring a polygonal cross section, for example a hexagonal cross section, cut in the first root portion 26, and a corresponding first end featuring a polygonal cross section of a respective end shaft 30, which protrudes from the body of the support apparatus 18. Conversely the opposite end of each end shaft 30 is sealingly enclosed in the actuator assembly 24 and is provided with a respective multi-start screw 34, coupled with a corresponding spiral mechanism 36 for opening and closing the gripping elements 22.

The seal of the support apparatus 18, as necessary to prevent liquid resin from getting in and for preventing lubricant from getting out of the body of the support apparatus 18 itself, is obtained by way of O-ring gaskets made from Teflon interposed between the fixed components and the movable components of such support apparatus 18. This prevents any contaminations with the mechanical components, so as to provide for a lifetime lubrication of the support apparatus 18.

As shown in figures 8 and 9, the movement of rotation of each of the end shafts 30 is obtained by way of a corresponding movement of rotation of a central shaft 38 contained in the actuator assembly 24 and oriented along the predefined axis A. The movement of rotation of the central shaft 38 results in an axial movement, along the predefined axis A, of a circular flange 40 contained in the actuator assembly 24 and containing in turn the spiral mechanisms with multi-start threads 36.

The end shafts 30, along with their respective multi-start screws 34, are arranged coaxially but radially with respect to the circular flange 40. The first end of each end shaft 30, featuring a polygonal cross-section, protrudes from the actuator assembly 24 via a front plate 42 at which the gripping elements 22, supported and operated by a central screw or by a spring, are mounted.

The front plate 42 is provided with a plurality of holes with seats for supporting and making the first ends, featuring a polygonal cross-section, of a corresponding plurality of end shafts 30, pass through. Respective O-Ring gaskets 48 made from Teflon, interposed between each gripping element 22, the end shaft 30 and the front plate 42, make it possible the correct operation of the support apparatus 18 even in the presence of contaminations that might deposit on the end shaft 30 itself, thus preventing the onset of such dangerous situations, as to structurally jeopardize the components involved.

The gripping elements 22 can be easily disassembled from the front side of the support apparatus 18, which is provided with a threaded nut or knob 44 (figure 10) which holds a support flange 46 which in turn holds each gripping element 22 in place on a respective end shaft 30. As shown in figure 11, it is thus sufficient to unscrew the threaded nut or knob 44 to remove the support flange 46 from the seats of the three end shafts 30, thus making it possible to quickly remove the gripping elements 22 and any crusts of resin by way of a cryogenic method. Therefore, maintenance and cleaning do not require removal of the support apparatus 18 from the impregnation plant 10, nor disassembling of the support apparatus 18 itself. The body of the support apparatus 18 can be sheathed by a tubular film of Teflon, consequently it does need any cleaning operations.

The gripping elements 22 can be moved, as with traditional four-bar linkage, by way of a screw system or a spring system. In a screw system, the gripping elements 22 can be moved by way of a screwdriver, whereas in a spring system the gripping elements 22 can be moved by way of a pressure mechanism. In the case of a screw system, it is possible to equip the support apparatus 18 so that the opening of the gripping elements 22 can be controlled by screwing both from the front side and from the rear side of the support apparatus 18 itself.

The support apparatus 18 can be mounted on the impregnation plant 10 both in a cantilever configuration and in a double-bearing configuration, depending on the transport system adopted to move the components 100 in the impregnation plant. The use of two support apparatuses 18 placed one in front of the other on pallets or on dual-chain impregnation plants 10 is provided for gripping and supporting components 100 having weights exceeding 60 Kg.

It is thus seen that the support apparatus for components of electric motors according to the present invention achieves the previously highlighted purposes. In particular, the support apparatus can be formed of an automatic big extension gripper of a "long life" type for gripping electric stators. This gripper is also suitable for operating in environments where temperatures up to 200°C are reached and where chemical products developing catalyzing vapors are possibly present.

The thus conceived support apparatus for components of electric motors according to the present invention is in any case susceptible of numerous modifications and variants, all falling within the same inventive concept; also, all details are replaceable by technically equivalent elements. In practice the materials used, as well as shapes and dimensions, can be materials, shapes and dimensions whatsoever, according to the technical requirements.

Therefore, the scope of protection of the invention is that set forth in the attached claims.

## Claims

1. An impregnation plant (10) for internally hollow cylindrical components (100) of electric motors, said impregnation plant (10) comprising a plurality of workstations arranged linearly and in sequence with respect to each other, said workstations being managed and controlled through a central processing unit, said plant (10) comprising:
- at least one heating station (12), configured for heating each component (100) to a predetermined temperature;
- at least one impregnation station (14), located downstream of the heating station (12) and configured for covering at least part of each component (100) with an impregnating substance;
- at least one finishing station (16), located downstream of the impregnation station (14) and configured for permanently making the impregnating substance adhere to each component (100); and
- at least one support apparatus (18) for each component (100), configured for rotatably supporting said component (100) and provided with moving means (50) for moving said component (100) through said workstations,
wherein said support apparatus (18) comprises at least one gripping assembly (20), provided with a plurality of gripping elements (22) extendible by rotation about a predefined axis (A), and at least one actuator assembly (24), configured for rotating said gripping elements (22) in both directions about said predefined axis (A), the impregnation plant (10) being **characterized in that** each gripping element (22) has a petal shape, a first root portion (26) being hinged to the body of the support apparatus (18) and a second gripping portion (28) being integrally formed in one piece with the first root portion (26) and inclined at a predefined angle with respect to said first root portion (26), wherein said second gripping portion (28) is arch-shaped and is provided with a knurled gripping surface to retain the inner cylindrical surface of a respective component (100) by contact.

2. The impregnation plant (10) according claim 1, **characterized in that** the first root portion (26) of each gripping element (22) is keyed on a respective end shaft (30) parallel to said predefined axis (A) and sealingly protruding from the actuator assembly (24).

3. The impregnation plant (10) according to claim 2, **characterized in that** the attachment of each gripping element (22) to the body of the support apparatus (18) is provided by a coupling between a hole (32) having a polygonal cross section, obtained on the first root portion (26), and a corresponding first end having a polygonal cross section of a respective end shaft (30), which protrudes from the body of said support apparatus (18).

4. The impregnation plant (10) according to claim 3, **characterized in that** the opposite end of each end shaft (30) is sealed in the actuator assembly (24) and is provided with a respective multi-start screw (34), coupled with a corresponding spiral mechanism (36) for opening and closing the gripping elements (22).

5. The impregnation plant (10) according to claim 4, **characterized in that** the movement of rotation of each of the end shafts (30) is obtained by a corresponding movement of rotation of a central shaft (38) contained in the actuator assembly (24) and oriented along said predefined axis (A), the movement of rotation of said central shaft (38) causing an axial movement, along said predefined axis (A), of a circular flange (40) contained in the actuator assembly (24) and containing in turn the spiral mechanisms (36) with multi-start threads.

6. The impregnation plant (10) according to claim 5, **characterized in that** the end shafts (30), with their respective multi-start screws (34), are arranged coaxially, but radially with respect to the circular flange (40).

7. The impregnation plant (10) according to any claims 3 to 6, **characterized in that** the first end having a polygonal cross section of each end shaft (30) protrudes from the actuator assembly (24) through a front plate (42) at which the gripping elements (22) are mounted, supported and driven by a central screw or by a spring.

8. The impregnation plant (10) according to claim 7, **characterized in that** the front plate (42) is provided with a plurality of holes with seats for support and passage of the first ends having a polygonal cross section of a corresponding plurality of end shafts (30), wherein respective O-ring sealing gaskets (48), placed between each gripping element (22), the end shaft (30) and the front plate (42), allow for a correct operation of the support apparatus (18) even in the presence of contaminations that possibly deposit on said end shaft (30).

9. The impregnation plant (10) according to any claims 2 to 8, **characterized in that** the support apparatus (18) is provided with a threaded nut or knob (44) which holds a support flange (46) which, in turn, keeps each gripping element (22) in place on a respective end shaft (30), the removal of said threaded nut or knob (44) and of said support flange (46) allowing for an easy disassembly of said gripping elements (22) from the front side of the support apparatus (18).

10. The impregnation plant (10) according to any of the previous claims, **characterized in that** the support apparatus (18) is provided with O-ring sealing gaskets interposed between the fixed components and the movable components of said support apparatus (18), so as to provide a lifetime lubrication of said support apparatus (18).

## Patentansprüche

1. Imprägnierungsanlage (10) für innerlich hohle zylinderförmige Komponenten (100) von Elektromotoren, wobei die Imprägnierungsanlage (10) mehrere Arbeitsstationen umfasst, die im Verhältnis zueinander linear und in Folge angeordnet sind, wobei die Arbeitsstationen durch eine zentrale Verarbeitungseinheit verwaltet und gesteuert werden, wobei die Anlage (10) Folgendes umfasst:
- mindestens eine Erwärmungsstation (12), die dafür gestaltet ist, jede Komponente (100) auf eine festgelegte Temperatur zu erwärmen,
- mindestens eine Imprägnierungsstation (14), die sich prozessabwärts der Erwärmungsstation (12) befindet und dafür gestaltet ist, zumindest einen Teil jeder Komponente (100) mit einer Imprägnierungssubstanz zu bedecken,
- mindestens eine Endbearbeitungsstation (16), die sich prozessabwärts der Imprägnierungsstation (14) befindet und dafür gestaltet ist, für das dauerhafte Haften der Imprägnierungssubstanz an jeder Komponente (100) zu sorgen, und
- mindestens eine Stützvorrichtung (18) für jede Komponente (100), die dafür gestaltet ist, die Komponente (100) drehbar zu stützen, und die mit Bewegungsmitteln (50) zum Bewegen der Komponente (100) durch die Arbeitsstationen versehen ist,
wobei die Stützvorrichtung (18) mindestens eine Greifanordnung (20) umfasst, die mit mehreren Greifelementen (22) versehen ist, die durch Drehung um eine vordefinierte Achse (A) erweiterbar sind, und mindestens eine Betätigungsanordnung (24), die dafür gestaltet ist, die Greifelemente (22) in beide Richtungen um die vordefinierte Achse (A) zu drehen, wobei die Imprägnierungsanlage (10) **dadurch gekennzeichnet ist, dass** jedes Greifelement (22) eine Blütenblattform aufweist, wobei ein erster Grundabschnitt (26) an den Körper der Stützvorrichtung (18) angelenkt ist und ein zweiter Greifabschnitt (28) einstückig integral mit dem ersten Grundabschnitt (26) gebildet und im Verhältnis zu dem ersten Grundabschnitt (26) in einem vordefinierten Winkel geneigt ist, wobei der zweite Greifabschnitt (28) bogenförmig und mit einer geriffelten Greifoberfläche versehen ist, um die innere Zylinderinnenfläche einer entsprechenden Komponente (100) durch Berührung zu halten.

2. Imprägnierungsanlage (10) nach Anspruch 1, **dadurch gekennzeichnet, dass** der erste Grundabschnitt (26) jedes Greifelements (22) an einer entsprechenden Endwelle (30) verkeilt ist, die parallel zu der vordefinierten Achse (A) liegt und abdichtend aus der Betätigungsanordnung (24) hervorsteht.

3. Imprägnierungsanlage (10) nach Anspruch 2, **dadurch gekennzeichnet, dass** die Anbringung jedes Greifelements (22) an dem Körper der Stützvorrichtung (18) durch eine Kopplung zwischen einer Öffnung (32), die einen mehreckigen Querschnitt aufweist, der am ersten Grundabschnitt (26) erzielt ist, und einem entsprechenden ersten Ende, das einen mehreckigen Querschnitt einer entsprechenden Endwelle (30) aufweist, die aus dem Körper der Stützvorrichtung (18) hervorsteht, bereitgestellt ist.

4. Imprägnierungsanlage (10) nach Anspruch 3, **dadurch gekennzeichnet, dass** das entgegengesetzte Ende jeder Endwelle (30) in der Betätigungsanordnung (24) abgedichtet und mit einer entsprechenden mehrgängigen Schraube (34) versehen ist, die mit einem entsprechenden Spiralmechanismus (36) zum Öffnen und Schließen der Greifelemente (22) gekoppelt ist.

5. Imprägnierungsanlage (10) nach Anspruch 4, **dadurch gekennzeichnet, dass** die Drehbewegung jeder der Endwellen (30) durch eine entsprechende Drehbewegung einer Mittelwelle (38) erzielt wird, die in der Betätigungsanordnung (24) enthalten und entlang der vordefinierten Achse (A) ausgerichtet ist, wobei die Drehbewegung der Mittelwelle (38) eine Axialbewegung eines kreisrunden Flanschs (40), der in der Betätigungsanordnung (24) enthalten ist und selbst den Spiralmechanismus (36) mit mehrgängigen Gewinden enthält, entlang der vordefinierten Achse (A) bewirkt.

6. Imprägnierungsanlage (10) nach Anspruch 5, **dadurch gekennzeichnet, dass** die Endwellen (30) mit ihren entsprechenden mehrgängigen Schrauben (34) koaxial, jedoch im Verhältnis zum kreisrunden Flansch (40) radial angeordnet sind.

7. Imprägnierungsanlage (10) nach einem der Ansprüche 3 bis 6, **dadurch gekennzeichnet, dass** das erste Ende, das einen mehreckigen Querschnitt jeder Endwelle (30) aufweist, aus der Betätigungsanordnung (24) durch eine Frontplatte (42) hervorsteht, an welcher die Greifelemente (22) montiert sind, gestützt werden und durch eine Mittelschraube oder durch eine Feder angetrieben werden.

8. Imprägnierungsanlage (10) nach Anspruch 7, **dadurch gekennzeichnet, dass** die Frontplatte (42) mit mehreren Öffnungen mit Sitzen zum Stützen und für den Durchlass der ersten Enden einer entsprechenden Mehrzahl von Endwellen (30) versehen ist, die einen mehreckigen Querschnitt aufweisen, wobei entsprechende O-Ring-Dichtungen (48), die zwischen jedem Greifelement (22), der Endwelle (30) und der Frontplatte (42) platziert sind, einen korrekten Betrieb der Stützvorrichtung (18) ermöglichen, auch beim Vorhandensein von Verunreinigungen, die möglicherweise auf der Endwelle (30) abgelagert sind.

9. Imprägnierungsanlage (10) nach einem der Ansprüche 2 bis 8, **dadurch gekennzeichnet, dass** die Stützvorrichtung (18) mit einer Mutter oder einem mit Gewinde versehenen Knopf (44) versehen ist, die/der einen Stützflansch (46) hält, der wiederum jedes Greifelement (22) auf einer entsprechenden Endwelle (30) an Ort und Stelle hält, wobei das Entfernen der Mutter oder des mit Gewinde versehenen Knopfes (44) und des Stützflansches (46) eine einfache Demontage der Greifelemente (22) von der Vorderseite der Stützvorrichtung (18) ermöglicht.

10. Imprägnierungsanlage (10) nach einem der vorhergehenden Ansprüche, **dadurch gekennzeichnet, dass** die Stützvorrichtung (18) mit O-Ring-Dichtungen versehen ist, die zwischen den festsitzenden Komponenten und den beweglichen Komponenten der Stützvorrichtung (18) eingesetzt sind, so dass eine lebenslange Schmierung der Stützvorrichtung (18) bereitgestellt ist.

## Revendications

1. Station d'imprégnation (10) pour des composants cylindriques creux intérieurs (100) de moteurs électriques, ladite station d'imprégnation (10) comprenant une pluralité de postes de travail agencés de façon linéaire et en séquence les uns par rapport aux autres, lesdits postes de travail étant gérés et contrôlés à travers une unité centrale de traitement, ladite station (10) comprenant :
- au moins une station de chauffage (12), configurée pour chauffer chaque composant (100) à une température prédéterminée ;
- au moins un poste d'imprégnation (14), qui se trouve en aval de la station de chauffage (12) et configuré pour couvrir au moins une partie de chaque composant (100) d'une matière d'imprégnation ;
- au moins un poste de finition (16), situé en aval du poste d'imprégnation (14) et configuré pour faire adhérer de façon permanente la matière d'imprégnation à chaque composant (100) ; et
- au moins un appareil de support (18) pour chaque composant (100), configuré pour supporter de manière rotative ledit composant (100) et muni de moyens de déplacement (50) permettant de déplacer ledit composant (100) à travers lesdits postes de travail,
dans lequel ledit appareil de support (18) comprend au moins un ensemble de préhension (20), muni d'une pluralité d'éléments de préhension (22) extensibles par rotation autour d'un axe prédéfini (A), et au moins un assemblage d'actionneur (24), configuré pour faire tourner lesdits éléments de préhension (22) dans les deux directions autour dudit axe prédéfini (A), la station d'imprégnation (10) étant **caractérisée en ce que** chaque élément de préhension (22) a une forme de pétale, une première partie de racine (26) étant articulée sur le corps de l'appareil de support (18) et une deuxième partie de préhension (28) étant intégralement formée d'une seule pièce avec la première partie de racine (26) et inclinée selon un angle prédéfini par rapport à ladite première partie de racine (26), dans laquelle ladite deuxième partie de préhension (28) a la forme d'un arc et est munie d'une surface de préhension moletée pour retenir la surface cylindrique intérieure d'un composant respectif (100) par contact.

2. Station d'imprégnation (10) selon la revendication 1, **caractérisée en ce que** la première partie de racine (26) de chaque élément de préhension (22) est clavetée sur un arbre d'extrémité respectif (30) parallèle audit axe prédéfini (A) et faisant saillie de manière étanche de l'assemblage d'actionneur (24).

3. Station d'imprégnation (10) selon la revendication 2, **caractérisée en ce que** la fixation de chaque élément de préhension (22) au corps de l'appareil de support (18) est assurée par un accouplement entre un trou (32) ayant une section transversale polygonale, obtenu sur la première partie de racine (26), et une première extrémité correspondante ayant une section transversale polygonale d'un arbre d'extrémité respectif (30), qui fait saillie depuis le corps dudit appareil de support (18).

4. Station d'imprégnation (10) selon la revendication 3, **caractérisée en ce que** l'extrémité opposée de chaque arbre d'extrémité (30) est scellée dans l'assemblage d'actionneur (24) et est pourvue d'une vis à pas multiples respective (34), couplée à un mécanisme en spirale correspondant (36) pour ouvrir et fermer les éléments de préhension (22).

5. Station d'imprégnation (10) selon la revendication 4, **caractérisée en ce que** le mouvement de rotation de chacun des arbres d'extrémité (30) est obtenu par un mouvement de rotation correspondant d'un arbre central (38) contenu dans l'assemblage d'actionneur (24) et orienté le long dudit axe prédéfini (A), le mouvement de rotation dudit arbre central (38) entraînant un mouvement axial, le long dudit axe prédéfini (A), d'une bride circulaire (40) contenue dans l'assemblage d'actionneur (24) et contenant à son tour les mécanismes en spirale (36) avec des filets à pas multiples.

6. Station d'imprégnation (10) selon la revendication 5, **caractérisée en ce que** les arbres d'extrémité (30), avec leurs vis à pas multiples respectives (34), sont disposés coaxialement, mais radialement par rapport à la bride circulaire (40).

7. Station d'imprégnation (10) selon l'une quelconque des revendications 3 à 6, **caractérisée en ce que** la première extrémité ayant une section transversale polygonale de chaque arbre d'extrémité (30) fait saillie de l'assemblage d'actionneur (24) à travers une plaque frontale (42) sur laquelle sont montés les éléments de préhension (22), supportés et entraînés par une vis centrale ou par un ressort.

8. Station d'imprégnation (10) selon la revendication 7, **caractérisée en ce que** la plaque frontale (42) est pourvue d'une pluralité de trous avec des sièges pour le support et le passage des premières extrémités ayant une section transversale polygonale d'une pluralité correspondante d'arbres d'extrémité (30), dans laquelle des joints d'étanchéité torique respectifs (48), placés entre chaque élément de préhension (22), l'arbre d'extrémité (30) et la plaque avant (42), permettent un fonctionnement approprié de l'appareil de support (18) même en présence d'éléments contaminants qui peuvent se déposer sur ledit arbre d'extrémité (30).

9. Station d'imprégnation (10) selon l'une quelconque des revendications 2 à 8, **caractérisée en ce que** l'appareil de support (18) est pourvu d'un écrou ou bouton fileté (44) qui maintient une bride de support (46) qui, à son tour, maintient chaque élément de préhension (22) en place sur un arbre d'extrémité respectif (30), le retrait dudit écrou ou bouton fileté (44)
et de ladite bride de support (46) permettant un démontage facile desdits éléments de préhension (22) depuis le côté avant de l'appareil de support (18).

10. Station d'imprégnation (10) selon l'une quelconque des revendications précédentes, **caractérisée en ce que** l'appareil de support (18) est muni de joints d'étanchéité toriques interposés entre les composants fixes et les composants mobiles dudit appareil de support (18), de manière à assurer une lubrification à vie dudit appareil de support (18).
